# EUROPÄISCHE PATENTANMELDUNG

(11) **EP 0 839 885 A1**
(43) Veröffentlichungstag der Anmeldung: **06.05.1998**
(21) Anmeldenummer: 97118672.1
(22) Anmeldetag: 28.10.1997
(51) Int. Cl.: C09D 175/04, C08G 18/44

(54) **Wässrige Bindemitteldispersion für physikalisch trocknende Überzugsmittel und deren Verwendung**

(30) Priorität: 30.10.1996 DE 19643802
(71) Anmelder: Herberts Gesellschaft mit beschränkter Haftung, 42285 Wuppertal (DE)
(72) Erfinder: Wandelmaier, Klaus, Dr., 42111 Wuppertal (DE); Wiggershaus, Stefan, 42281 Wuppertal (DE)
(74) Vertreter: Türk, Gille, Hrabal, Leifert

(57) **Zusammenfassung**

Die Erfindung betrifft eine wäßrige Bindemitteldispersion für physikalisch trocknende Überzugsmittel, die ein Gemisch aus
A) 20 - 80 Gew.-% eines oder mehrerer, Carbonatgruppierungen enthaltender Polyurethane mit einem Zahlenmittel der Molmasse (Mn) von 70 000 bis 500 000 in Form einer wäßrigen Dispersion und
B) 20 - 80 Gew.-% eines oder mehrerer carbonatgruppenfreier und bevorzugt harnstoffgruppenfreier, ionische Gruppen enthaltender Polyurethanharze mit einem Zahlenmittel der Molmasse (Mn) von 10.000 bis 300.000 und einer Säurezahl von 5 bis 50 in Form einer wässrigen Dispersion enthält,
wobei sich die Gew.-% der Komponenten A) und B) jeweils auf den Harzfestkörper beziehen und zu 100 % ergänzen.

## Beschreibung

Die Erfindung betrifft wasserverdünnbare Bindemitteldispersionen, sowie diese enthaltende physikalisch trocknende Überzugsmittel auf wäßriger Basis, die insbesondere für uni- und metallicfarbene Basisschichten in einer Mehrschichtlackierung geeignet sind.

In Industrie und Gewerbe besteht ein Bedürfnis nach physikalisch trocknenden Überzugsmitteln, die insbesondere zur Reparaturlackierung von verschiedenen Substraten, wie Metallgegenstände, insbesondere auf dem Kraftfahrzeugsektor oder zur Lackierung von Maschinen geeignet sind. Für derartige Zwecke sind Überzugsmittel erforderlich, die bei Raumtemperatur oder bei geringfügigem Erwärmen, beispielsweise auf bis zu 60 °C, trocknen bzw. härten. Aus ökologischen Gründen ist man bestrebt, die Überzugsmittel in wäßriger Form bereitzustellen.

Derartige physikalisch trocknende wäßrige Überzugsmittel, die beispielsweise für Reparaturlackierungen von Kraftfahrzeugen geeignet sind, sind bekannt, beispielsweise aus den DE-A-41 15 015 und DE-A-41 15 042. Es handelt sich hier um Überzugsmittel auf Basis verschiedener wasserverdünnbarer Polyurethandispersionen. Die erhaltenen Überzüge zeigen jedoch bezüglich verschiedener Eigenschaften, wie z.B. Härte und Wasserfestigkeit, noch nicht das erforderliche Qualitätsniveau.

In der DE-A-39 36 794 werden Polyurethanharnstoffe sowie ihre Verwendung in wässrigen Metallic-Basislacken beschrieben. Die Bindemittel enthalten mindestens 200 Milliäquivalente pro 100 g Feststoff an chemisch eingebauten Carbonatgruppierungen. Basislacke auf Grundlage der vorstehend genannten Bindemittel zeigen im Vergleich zu Basislacken auf Lösemittelbasis jedoch eine verbesserungsbedürftige Haftung und unbefriedigende Effektausbildung.

Weiterhin werden in den DE-A-41 22 265 und DE-A-41 22 266 Polyurethan-Dispersionen beschrieben, die nach Überführung in die wässrige Phase unter anderem zur Herstellung von Metallic- und Unibasislacken geeignet sind. Die Polyurethandispersionen werden hergestellt durch radikalisch initiierte Polymerisation von Polyurethanmakromeren mit lateralen und/oder terminalen Vinylgruppen. Nachteil dieser Überzugsmittel ist vor allem eine unter den Bedingungen der Fahrzeugreparaturlackierung erreichbare zu geringe Wasserfestigkeit und eine mangelhafte Effektausbildung.

In der EP-A-634 431 werden weitere wasserverdünnbare Polyurethandispersionen beschrieben, die erhalten werden durch Kettenverlängerung eines Polyurethanprepolymeren mit Polyisocyanaten. Sie sind in der Mehrschichtlackierung einsetzbar für Decklack- und Basisschichten. Unter den speziellen Bedingungen der Fahrzeugreparaturlackierung bzw. ähnlicher an die Bedingung niedriger Härtungstemperaturen gebundener Anwendungen werden mit den beschriebenen Polyurethandispersionen ungenügende Wasserfestigkeiten erzielt. Mit diesen Polyurethandispersionen formulierte Metallicbasislacke zeigen eine verbesserungsbedürftige Effektausbildung und unzureichende Lagerstabilität.

In der DE-A-43 44 063 werden Polyurethane, hergestellt durch Polymerisation von Polyurethanmakromonomeren in Gegenwart ungesättigter polymerisierbarer Monomere, kombiniert mit Polyurethandispersionen, die durch Kettenverlängerung von OH-funktionellen Polyurethanprepolymeren mit Polyisocyanaten erhalten werden. In der DE-A-43 39 085 werden Bindemittelmischungen aus Carbonatgruppierungen enthaltenden Polyurethanen und Polyurethanen, hergestellt durch Polymerisation von Polyurethanmakromonomeren in Gegenwart ungesattigter polymerisierbarer Monomere, eingesetzt. Wasserbasislacke auf dieser Bindemittelbasis zeigen eine schlechte Effektausbildung.

Aufgabe der Erfindung war es daher, Bindemittel für physikalisch trocknende Überzugsmittel auf wäßriger Basis bereitzustellen, welche als Basislack im Mehrschichtaufbau die Eigenschaften konventioneller Basislacke, insbesondere bezüglich Härte und Wasserfestigkeit, erreichen und welche dem Basislack eine gute Metalleffektausbildung sowie befriedigende Ablaufsicherheit an senkrechten Flächen verleihen. Außerdem sollen die physikalisch trocknenden Überzugsmittel eine ausreichende Lagerstabilität besitzen, wie sie für die Belange der Autoreparaturlackierung gefordert wird, und im Falle von Metalliclacken eine hohe Gasungsstabiliät aufweisen.

Die Aufgabe wird gelöst durch eine wasserverdünnbare Bindemitteldispersion, enthaltend ein Gemisch aus
A) 20 - 80 Gew.-%, bevorzugt 40 - 60 Gew.-%, eines oder mehrerer, Carbonatgruppierungen enthaltender Polyurethane mit einem Zahlenmittel der Molmasse (Mn) von 70 000 bis 500 000, in Form einer wäßrigen Dispersion, erhältlich durch Umsetzung von
   a) 10-40 Gew.-% eines oder mehrerer organischer Polyisocyanate, die keine hydrophilen oder in hydrophile Gruppen überführbare Gruppen aufweisen,
   b) 40-80 Gew.-% einer oder mehrerer höhermolekularer organischer Polyhydroxyverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,
   c) 0,2-18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,
   d) 1-12 Gew.-% einer oder mehrerer Verbindungen, die neben mindestens einer anionischen Gruppe oder mindestens einer in eine anionische Gruppe überführbaren Gruppe mindestens ein gegenüber Isocyanatgruppen reaktionsfähiges Wasserstoffatom aufweisen, und
   e) 0-8 Gew.-% einer oder mehrerer nichtionisch hydrophiler Verbindungen, die mindestens eine Isocyanatgruppe oder mindestens eine gegenüber Isocyanatgruppen reaktionsfähige Gruppe aufweisen, und
B) 20 - 80 Gew.-%, bevorzugt 40 - 60 Gew.-%, eines oder mehrerer carbonatgruppenfreier und bevorzugt harnstoffgruppenfreier, ionische Gruppen enthaltender Polyurethanharze mit einem Zahlenmittel der Molmasse (Mn) von 10.000 bis 300.000 und einer Säurezahl von 5 bis 50 in Form einer wässrigen Dispersion, erhältlich durch Bereitung eines OH-Gruppen enthaltenden Polyurethan-Prepolymeren mit einer OH-Zahl von 5 bis 75 und einem Zahlenmittel der Molmasse (Mn) von 5.000 bis 50.000, durch Umsetzung in organischem Medium von
   f) einer oder mehreren mit Isocyanat reaktiven Verbindungen mit einer Säurezahl von 0 bis 10, in Form von
   f1) 70 bis 100 Gew.-% eines oder mehrerer, bevorzugt carboxylgruppenfreier Polyesterpolyole und/oder Polyetherpolyole mit einem Molekulargewicht von 500 bis 6.000, zusammen mit
   f2) 0 bis 30 Gew.-% einer oder mehrerer von f1) unterschiedlicher Verbindungen mit mindestens zwei mit Isocyanat reaktiven Gruppen, mit einem Molekulargewicht von 60 bis 400, mit
   g) mindestens einer Verbindung mit zwei mit Isocyanat reaktiven Gruppen und mindestens einer anionischen oder zur Anionenbildung befähigten Gruppe, wobei die Komponente g) separat oder in Form eines Reaktionsproduktes g1) aus Komponente g) und einem oder mehreren organischen Diisocyanaten g2) eingesetzt werden kann, wobei das molare Verhältnis der mit Isocyanatgruppen reaktiven Gruppen von g) zu den Isocyanatgruppen von g2) 1:1,5 bis 1:2,5 beträgt und wobei das Reaktionsprodukt g1) auch in Anwesenheit von Komponente f) hergestellt werden kann und die Komponente g) oder das Reaktionsprodukt g1) in einer derartigen Menge eingesetzt werden, daß die fertigen Polyurethanharze die gewünschte Säurezahl aufweisen, sowie mit
   h) einem oder mehreren Polyisocyanaten mit mindestens zwei freien Isocyanatgruppen pro Molekül, in einer derartigen Menge, daß das molare Verhältnis der OH-Gruppen der Komponente f) zu den NCO-Gruppen der Komponenten g) und h) 1,01:1 bis 3:1 beträgt,
      worauf das aus f), g) und h) erhaltende Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
   i) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen,
wobei sich die Gew.-% der Komponenten A) und B) jeweils auf den Harzfestkörper beziehen und zu 100 % ergänzen.

Einen weiteren Gegenstand der Erfindung bilden wäßrige Überzugsmittel, enthaltend
- 8 bis 20 Gew.-% einer oder mehrerer Bindemitteldispersionen, wie vorstehend beschrieben,
- 50 bis 90 Gew.-% Wasser,
- 0 bis 20 Gew.-% eines oder mehrerer organischer Lösemittel,
- 0,1 bis 20 Gew.-% eines oder mehrerer Effektpigmente und/oder farbgebender Pigmente - und/oder Füllstoffe,
- sowie gegebenenfalls übliche Additive und Hilfsstoffe.

Die erfindungsgemäße Bindemitteldispersion enthält als Komponente A) ein oder mehrere Polyurethane mit Carbonatgruppierungen. Die Polyurethane können ggf. auch Harnstoffgruppen enthalten, so daß es sich auch um Polyurethanharnstoffe handeln kann.

Bevorzugt weisen die als Komponente A) eingesetzten Polyurethane mindestens 200 Milliäquivalent pro 100 g Feststoff an chemisch eingebauten Carbonatgruppierungen -O-CO-O- auf. Sie enthalten bevorzugt nicht mehr als insgesamt 320 Milliäquivalent pro 100 g Feststoff an chemisch eingebauten Urethangruppierungen-NH-CO-O und ggf. chemisch eingebauten Harnstoffgruppierungen -NH-CO-NH-. Beispiele für derartig verwendbare Polyurethane sind in der DE-A-39 36 794 beschrieben.

Die Komponente A) der erfindungsgemäßen Bindemitteldispersion ist erhältlich durch Umsetzung der vorstehend definierten Komponenten a), b), c), d) und ggf. e).

Die Komponente a) wird in einer Menge von 10-40 Gew.-%, bevorzugt von 15-35 Gew.-%, bezogen auf den Festkörpergehalt von A), eingesetzt. Als Komponente a) können übliche aliphatische, cycloaliphatische und/oder aromatische Polyisocyanate mit mindestens zwei Isocyanatgruppen pro Molekül eingesetzt werden. Die Polyisocyanate haben bevorzugt eine Molmasse von 112 bis 1000, besonders bevorzugt eine Molmasse von 140-400. Sie enthalten als funktionelle Gruppe bevorzugt 2 Isocyanatgruppen im Molekül. Die Isocyanatgruppen können symmetrisch oder asymmetrisch angeordnet sein. Bevorzugt werden die Isomeren oder Isomerengemische von organischen Diisocyanaten eingesetzt. Beispiele für einsetzbare aromatische Diisocyanate sind Phenylendiisocyanat, Toluylendiisocyanat, Xylylendiisocyanat, Biphenylendiisocyanat, Naphthylendiisocyanat und Diphenylmethandiisocyanat.

Besonders geeignet sind (cyclo)aliphatische Diisocyanate, da sie Produkte mit geringer Vergilbungsneigung ergeben. Beispiele für (cyclo)aliphatische Diisocyanate sind Isophorondiisocyanat, Cyclopentylendiisocyanat, Hydrierungsprodukte aromatischer Diisocyanate, wie z.B. Cyclohexylendiisocyanat, Methylcyclohexylendiisocyanat, Dicyclohexylmethandiisocyanat. Als aliphatische Diisocyanate können Verbindungen der allgemeinen Formel

O=C=N - (CR₂)ᵣ - N=C=O

eingesetzt werden, worin r eine ganze Zahl von 2 bis 20, insbesondere 6-8 und R Wasserstoff oder einen niedrigen Alkylrest mit 1-8 C-Atomen, vorzugsweise 1-2 C-Atomen bedeuten. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat, Trimethylhexandiisocyanat. Besonders bevorzugt werden als Diisocyanate Isophorondiisocyanat und Dicyclohexyl-methandiisocyanat. Die Komponente a) kann auch einen Anteil höherwertiger Polyisocyanate enthalten, vorausgesetzt, es erfolgt keine Beeinträchtigung durch Gelbildung. Als Triisocyanate sind beispielsweise solche Produkte geeignet, die durch Trimerisation oder Oligomerisation von Diisocyanaten oder durch Reaktion von Diisocyanaten mit polyfunktionellen OH- oder NH-Gruppen enthaltenden Verbindungen entstehen. Beispiele hierfür sind das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann ggf. durch Zusatz von Monoisocyanaten gesenkt werden. Beispiele für solche kettenabbrechende Monoisocyanate sind Phenylisocyanat, Cyclohexylisocyanat und Stearylisocyanat.

Die zur Herstellung der Bindemittelkomponente A) verwendete Komponente b) wird in Mengen von 40-80 Gew.-%, bevorzugt 45-75 Gew.-%, bezogen auf den Festkörpergehalt von Komponente A), eingesetzt.
Als Komponente b) können organische Polyhydroxylverbindungen mit einer Molmasse von bevorzugt 300-5000, besonders bevorzugt von 500-3000, verwendet werden. Die Komponente b) enthält zu mindesten 50 Gew.-%, bevorzugt zu mehr als 70 Gew.-% Polyhydroxypolycarbonate des genannten Molekulargewichtsbereiches. Unter Polyhydroxypolycarbonaten sind Ester der Kohlensäure zu verstehen, die durch Reaktion von Kohlesäurederivaten, z.B. Diphenylcarbonat oder Phosgen, mit Diolen erhalten werden. Als verwendbare Diole kommen z.B. Ethylenglykol, Propandiol-1,2, Propandiol-1,3, Butandiol-1,3, Butandiol-1,4, Hexandiol-1,6, Octandiol-1.8, Neopentylglykol, 2-Methyl-1,3-propandiol, 1,4-Bishydroxymethylcyclohexan, 2,2,4-Trimethyl-1,3-pentandiol, ferner Diethylenglykol, Tri- und Tetraethylenglykol, Dipropylenglykol, Polypropylenglykole, Dibutylenglykol, Polybutylenglykole und Bisphenol A in Frage. Vorzugsweise enthält die Diolkomponente zur Herstellung der Polyhydroxypolycarbonate 40-100 Gew.-% Hexandiol, bevorzugt Hexandiol-1,6 und/oder Hexandiolderivate, vorzugsweise solche, die neben endständigen OH-Gruppen Ether- oder Estergruppen aufweisen.

Bevorzugt sollen die Polyhydroxypolycarbonate im wesentlichen linear sein. Sie können jedoch auch durch Einbau polyfunktioneller Komponenten, insbesondere niedermolekularer Polyole, leicht verzweigt sein. Geeignete niedermolekulare Polyole sind z. B. Glycerin, Trimethylolpropan, Hexantriol-1,2,6, Butantriol-1,2,4, Trimethylpropan, Pentaerythrit.

Neben den Polyhydroxypolycarbonaten kann die Komponente b) auch andere, aus der Polyurethanchemie an sich bekannte Polyhydroxylverbindungen des genannten Molekulargewichtsbereiches enthalten. Beispiele hierfür sind:
- Dihydroxypolyester aus Dicarbonsäuren, z.B. aus Bernsteinsäure, Adipinsäure, Sebacinsäure, Korksäure, Azelainsäure, Isophthalsäure, Terephthalsäure, Tetrahydrophthalsäure, und Diolen, z.B. aus Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3 oder den verschiedenen isomeren Bishydroxymethylcyclohexanen
- Polylactone, wie z.B. die auf den vorstehend genannten zweiwertigen Alkoholen gestarteten Polymerisate des epsilon-Caprolactons
- Polyether, wie z.B. die unter Verwendung von zweiwertigen Startermolekülen, wie Wasser, den oben genannten Diolen oder zwei NH-Bindungen aufweisenden Aminen, hergestellten Polymerisate bzw. Mischpolymerisate des Tetrahydrofurans, Propylenoxids, Ethylenoxids, der Butylenoxide oder des Epichlorhydrins.

Die Polyetherdiole sollen vorzugsweise maximal 10 Gew.-% an Ethylenoxideinheiten enthalten. Bevorzugt handelt es sich um Polyetherdiole auf Basis Propylenoxid und Tetrahydrofuran.

Bei der Herstellung der Bindemittelkomponente A) wird die Komponente c) mitverwendet. Die Komponente c) wird in Mengen von 0,2-18 Gew.-%, bevorzugt von 0,5-10 Gew.-%, bezogen auf den Festkörpergehalt von A) eingesetzt. Bei der Komponente c) handelt es sich beispielsweise um die aus der Polyurethanchemie bekannten niedermolekularen mindestens difunktionellen Hydroxyl- und/oder Aminogruppen aufweisenden Verbindungen mit Molmassen von beispielsweise 60-400. Sie dienen während der Isocyanataddition als Kettenverlängerer (beim Einsatz difunktioneller Verbindungen) oder als Vernetzer (beim Einsatz tri- oder mehrfunktioneller Verbindungen). Die funktionellen Gruppen können über aliphatische, aromatische oder alicyclische Reste verbunden sein.

Beispiele für niedermolekulare Polyole sind niedermolekulare mehrwertige Alkohole mit beispielsweise bis zu 20 C-Atomen im Molekül, wie Ethylenglykol, Diethylenglykol, Triethylenglykol, 1,2-Propandiol, 1,3-Propandiol, 1,4-Butandiol, 1,6-Hexandiol, Neopentylglykol, Trimethylolpropan, Ricinusöl, 1,2-Cyclohexandiol, 1,4-Cyclohexandimethanol, Bisphenol A, Bisphenol F oder Pentaerythrit. Beispiele für niedermolekulare Polyamine sind Alkylenpolyamine mit 1-30 C-Atomen, vorzugsweise mit 2-12 C-Atomen. Bevorzugt sind Polyamine mit linearer oder verzweigter aliphatischer, cycloaliphatischer oder aromatischer Struktur und wenigstens 2 primären Aminogruppen. Geeignet sind Diamine wie Ethylendiamin, Propylendiamin, 1,4-Butylendiamin, Piperazin, 1,4-Cyclohexyldimethylamin, Hexamethylendiamin-1,6, Isophorondiamin, 4,4'-Diamino-dicyclohexylmethan, 4,4'-Diamino-3,3'-dimethyl-dicyclohexylmethan. Es können auch Hydrazin und substituierte Hydrazide eingesetzt werden. Wenigstens teilweise können auch höherfunktionelle Polyamine mit mindestens drei Aminogruppen eingesetzt werden. Beispiele hierfür sind Diethylentriamin, Triethylentetramin, Dipropylentriamin, Tripropylentetramin, Dibutylentriamin.

Zum Aufbau der Bindemittelkomponente A) wird auch die Komponente d) verwendet. Diese wird in Mengen von 1-12 Gew.-%, bevorzugt 1,5-6 Gew.-% eingesetzt. Bei der Komponente d) handelt es sich um Verbindungen, mit mindestens einem, bevorzugt zwei gegenüber Isocyanatgruppen reaktionsfähigen Wasserstoffatomen und mindestens einer anionischen oder in eine anionische Gruppe überführbaren Gruppe. Geeignete mit Isocyanat reagierende Gruppen sind insbesondere Hydroxylgruppen sowie primäre und/oder sekundäre Aminogruppen. Zur Anionenbildung befähigte Gruppen sind Carboxyl-, Sulfonsäure- und/oder Phosphonsäuregruppen. Bevorzugte Komponenten d) sind Dihydroxyalkansäuren, wie z.B. Dihydroxypropionsäure, Dihydroxybernsteinsäure, Dihydroxybenzoesäure. Besonders bevorzugt sind die alpha, alpha-Dimethylolalkansäuren der allgemeinen Formel 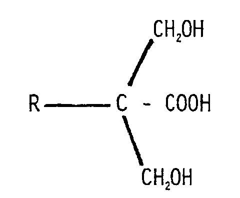 wobei R Wasserstoff oder eine Alkylgruppe mit bis zu 20 C-Atomen bedeutet. Beispiele für solche Verbindungen sind 2,2-Dimethylolessigsäure, 2,2-Dimethylolpropionsäure, 2,2-Dimethylolbuttersäure und 2,2-Dimethylopentansäure. Bevorzugt ist die 2,2-Dimethylolpropionsäure.

Aminogruppenhaltige Verbindungen sind beispielsweise Diaminovalerinsäure, Diaminobenzoesäure, 2,4-Diaminotoluolsulfonsäure. Die Menge an Komponente d) soll vorzugsweise so gewählt werden, daß sich im unneutralisierten Polyurethanharz A) eine Säurezahl von wenigstens 5, vorzugsweise wenigstens 10 ergibt und die obere Grenze der Säurezahl bei 60, vorzugsweise 40 liegt (bezogen auf Feststoff).

Zum Aufbau der Bindemittelkomponente A) kann ggf. die Komponente e) verwendet werden. Die Komponente e) wird in Mengen von 0-8 Gew.-%, bevorzugt 0,5-6 Gew.-% eingesetzt. Bei der Komponente e) handelt es sich beispielsweise um innerhalb von Polyetherketten eingebaute Polyethylenoxideinheiten aufweisende Verbindungen mit mindestens einer Isocyanatgruppe oder mindestens einer gegenüber Isocyanatgruppen reaktionsfähigen Gruppe. Das sind beispielsweise e1) Diisocyanate und/oder difunktionelle Verbindungen mit gegenüber Isocyanatgruppen reaktionsfähigen Wasserstoffatomen, welche seitenständige, Ethylenoxideinheiten enthaltende Seitenketten aufweisen oder es sind beispielsweise e2) Monoisocyanate und/oder monofunktionelle Verbindungen mit gegenüber Isocyanatgruppen reaktionsfähigen Wasserstoffatomen, die Ethylenoxideinheiten aufweisende Polyetherketten enthalten. Es können auch Gemische aus e1) und e2) eingesetzt werden.

Die Herstellung der Carbonatgruppierungen enthaltenden Polyurethane A) aus den Komponenten a) bis e) kann in an sich bekannter Weise ein- oder mehrstufig erfolgen. Die Mengenverhältnisse der Reaktionspartner werden dabei so gewählt, daß das Äquivalentverhältnis der Isocyanatgruppen der Komponente a) und ggf. der Komponente e) zu gegenüber Isocyanatgruppen reaktionsfähigen Gruppen der Komponenten b), c), d) und ggf. e) bei 0,8:1 bis 2:1, vorzugsweise 0,95:1 bis 1,5:1 liegt. Die Komponente e) gelangt in einer solchen Menge zum Einsatz, daß in dem erhaltenen Polyurethan A) 0-30, vorzugsweise 1-20 Gew.-% an innerhalb von Polyetherketten eingebauten Etyhlenoxideinheiten vorliegen. Die Menge der Komponente d) und der Neutralisationsgrad der mit der Komponente d) eingebauten ionischen Gruppen wird so gewählt, daß in dem letztendlich erhaltenen Polyurethan A) 0-120, vorzugsweise 1-80 Milliäquivalente pro 100 g Feststoff an ionischen Gruppen vorliegen, wobei die Gesamtmenge der Ethylenoxideinheiten und der ionischen Gruppen innerhalb der genannten Bereiche so bemessen sein muß, daß die Dispergierbarkeit der Polyurethane in Wasser gewährleistet ist. Herstellungsvarianten für die Polyurethane A) sind beispielsweise in der DE-A-39 36 794 beschrieben.

Bei der erfindungsgemäßen Bindemittelkomponente B) handelt es sich um carbonatgruppenfreie und bevorzugt harnstoffgruppenfreie Polyurethane. Zur Herstellung der erfindungsgemäßen Bindemittelkomponente B) wird die Komponente f1) verwendet. Bei der Komponente f1) handelt es sich bevorzugt um eine Polyolkomponente mit endständigen OH-Gruppen Als Komponente f) können beispielsweise Polyetherpolyole der allgemeinen Formel I eingesetzt werden:

H - [O- (CHR¹)ₙ -]ₘ OH (I)

mit R¹ = Wasserstoff oder ein niedriger Alkylrest (zum Beispiel mit 1 bis 6 oder 1 bis 4 C-Atomen, gegebenenfalls mit einem oder mehreren Substituenten,
- n =: 2 bis 6, bevorzugt 3 bis 4 und
- m =: mindestens 5, zum Beispiel 5 bis 50.

Beispiele hierfür sind Poly(oxytetramethylen)glykole, Poly(oxyethylen)glykole und Poly(oxypropylen)glykole.

Vorzugsweise werden solche Polyetherpolyole mit einem Molekulargewicht im Bereich von 500 und 3.000 verwendet, die ohne Mitverwendung von Ethylenoxid, das heißt insbesondere unter ausschließlicher Verwendung von Propylenoxid oder Tetrahydrofuran herstellbar sind. Die OH-Zahl beträgt bevorzugt 40 bis 220.

Die Komponente f1) kann auch hydrophile Polyole umfassen mit einem oder zwei gegenüber Isocyanaten reaktionsfähigen Wasserstoffatomen, die in der Seitenkette Ethylenoxid aufweisende Polyetherketten tragen oder Gemische davon. Diese bewirken eine bessere Dispergierung der Polyurethane in der Wasserphase.

Weiterhin können als Komponente f1) Polyesterpolyole eingesetzt werden. Die Polyesterpolyole können beispielsweise durch Veresterung von organischen Dicarbonsäuren oder ihren Anhydriden mit organischen Polyolen hergestellt werden. Die Dicarbonsäuren und die Polyole können aliphatische oder aromatische Dicarbonsäuren und Polyole sein.

Die zur Herstellung der Polyesterpolyole verwendeten Polyole sind zum Beispiel Diole wie Alkylenglykole, beispielsweise Ethylenglykol, Butylenglykol, Neopentylglykol und andere Glykole wie Dimethylolcyclohexan. Daneben können auch geringe Mengen an höherfunktionellen oder Gemische aus höher- und monofunktionellen OH-Komponenten, wie zum Beispiel Trimethylolpropan, Pentaerythrit, Glycerin, Hexantriol; Polyether, die Kondensate von Glykolen mit Alkylenoxiden sind; Monoether solcher Glykole, wie Diethylenglykolmonoethylether und Tripropylenglykolmonomethylether, eingesetzt werden.

Die Säurekomponente des Polyesterpolyols besteht bevorzugt in erster Linie aus niedermolekularen Dicarbonsäuren oder ihren Anhydriden mit beispielsweise 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Fumarsäure, Maleinsäure, Glutarsäure, Bernsteinsäure oder Itaconsäure. Anstelle dieser Säuren können auch ihre Anhydride, soweit diese existieren, verwendet werden. Es ist auch möglich, um verzweigte Polyester zu erhalten, Anteile an trifunktionellen Carbonsäuren zuzusetzen, wie Trimellithsäure, Apfelsäure, Aconitsäure, Bishydroxyethyltaurin, sowie Dimethylolpropionsäure.

Die Polyesterpolyole besitzen vorzugsweise ein Molekulargewicht von 400 bis 6.000, eine OH-Zahl von 20 bis 280 und eine Säurezahl von kleiner 3. Bevorzugt werden lineare Polyesterpolyole eingesetzt.

Ferner lassen sich auch Polyesterpolyole, bevorzugt Diole, die sich von Lactonen ableiten, als Komponente f1) benutzen. Diese Produkte erhält man beispielsweise durch die Umsetzung eines epsilon-Caprolactons mit einem Diol. Solche Produkte sind zum Beispiel in der US-A-3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrende Molekülanteile können der Formel 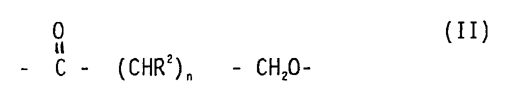 entsprechen, in der n bevorzugt 4 bis 6 ist und der Substituent R² Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton zum Beispiel 6 bis 8 Kohlenstoffatome enthalten sollte und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel III dargestellt werden: 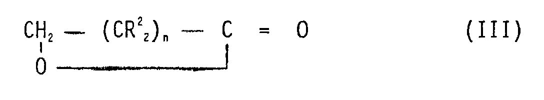 in der n und R² die bereits angegebene Bedeutung haben.

Für die Herstellung der Polyesterdiole bevorzugte Lactone sind die epsilon-Caprolactone, bei denen n den Wert 4 hat. Das am meisten bevorzugte Lacton ist das unsubstituierte epsilon-Caprolacton, bei dem n den Wert 4 hat und alle R²-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Für die Umsetzung mit den Lactonen geeignete aliphatische Diole sind beispielsweise Ethylenglykol, 1,3-Propandiol, 1,4-Butandiol, Dimethylolcyclohexan.

Es können auch sequenzierte Polyole f1) aus Polyethern und Polyestern verwendet werden.

Die Polyole f1) sind im wesentlichen frei von Carboxylgruppen, das heißt es sind nur geringe Anteile von nicht umgesetzten COOH-Gruppen vorhanden. Die Säurezahl liegt bevorzugt unter 10 mg KOH/g, im allgemeinen unter 5. Diese geringen Anteile an gegebenenfalls ionischen Gruppen ergeben keinen Beitrag zur Stabilisierung der wässrigen Dispersion.

Es können auch Mischungen verschiedener Polyole f1) eingesetzt werden.

Bei den gegebenenfalls mitverwendbaren niedermolekularen Verbindungen f2) handelt es sich beispielsweise um niedermolekulare Alkohole. Es sind die aus der Polyurethanchemie an sich bekannten im Sinne einer Isocyanat-Additionsreaktion mindestens difunktionellen Hydroxylgruppen aufweisenden Verbindungen eines unter 400 liegenden Molekulargewichts. Als Verbindung kommen sowohl im Sinne der Isocyanat-Additionsreaktion difunktionelle Verbindungen als auch mindestens trifunktionelle Verbindungen bzw. beliebige Gemische derartiger Verbindungen in Betracht. Insbesondere ist es bevorzugt, Diole bei der Umsetzung einzusetzen.

Beispiele für Komponenten f2) sind niedermolekulare mehrwertige Alkohole wie Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, Trimethylolethan, isomere Hexantriole oder Pentaerythrit oder Gemische davon. Solche Polyolverbindungen weisen insbesondere ein Molekulargewicht unter 400 auf.

Die Menge der niedermolekularen Verbindungen f2) kann bis zu 30 Gew.-% bezogen auf f1) betragen. Über die Menge von höherfunktionellen Polyolen kann der Verzweigungsgrad kontrolliert werden. Es ist jedoch darauf zu achten, daß Vernetzungen weitgehend vermieden werden.

Erfindungsgemäß wird zur Herstellung der Polyurethandispersion B) Komponente g) eingesetzt. Die Komponente g) kann dabei separat oder in Form eines Reaktionsproduktes g1) aus Komponente g) und einem oder mehreren Diisocyanaten g2) eingesetzt werden.

Bei der Komponente g) handelt es sich um Verbindungen mit isocyanatreaktiven Gruppen und anionischen bzw. zur Anionenbildung befähigten Gruppen. Geeignete mit Isocyanatgruppen reagierende Gruppen sind insbesondere nichtionische Gruppen wie Hydroxylgruppen, Thiolgruppen und primäre und sekundäre Aminogruppen. Zur Anionenbildung befähigte Gruppen sind zum Beispiel Carboxyl-, Phosphonsäure- und Sulfonsäuregruppen . Als Verbindungen, die mindestens zwei mit Isocyanaten reagierende Gruppen und mindestens eine zur Anionenbildung befähigte Gruppe enthalten, sind zum Beispiel Dihydroxysäuren und Diaminosäuren geeignet. Dihydroxysäuren sind beispielsweise Dihydroxycarbonsäuren, wie Dihydroxypropionsäure, Dimethylolpropionsäure, Dimethylolessigsäure, Dimethylolbuttersäure, Dihydroxybernsteinsäure oder Dihydroxybenzoesäure geeignet. Geeignet sind auch die durch Oxidation von Monosacchariden zugänglichen Polyhydroxysäuren, zum Beispiel Glukonsäure, Zuckersäure, Schleimsäure, Glucuronsäure und dergleichen. Aminogruppenhaltige Verbindungen sind beispielsweise Diaminocarbonsäuren, wie alpha,delta-Diaminovaleriansäure, 3,4-Diaminobenzoesäure, 2,4-Diaminotoluolsulfonsäure-(5) und 4,4-Diamino-di-phenylethersulfonsäure. Phosphorsäuregruppenhaltige Verbindungen sind zum Beispiel 2,2-Dimethylolpropanphosphonsäure oder Diethanolamidmethanphosphonsäure. Die Dihydroxycarbonsäuren sind bevorzugt, besonders bevorzugt ist die Verwendung von Dimethylolpropionsäure.

Eine bevorzugte Ausführungsform zur Herstellung der Polyurethandispersion B) besteht darin, daß die Komponente g) in Form eines Reaktionsproduktes g1) aus Komponente g) und einem oder mehreren Diisocyanaten g2) eingesetzt wird. Als Reaktionsprodukt g1) entstehen NCO-terminierte Verbindungen. Es handelt sich bei diesen Verbindungen im wesentlichen um niedermolekulare Verbindungen. Dabei beträgt das molare Verhältnis der nichtionischen reaktiven Gruppen von g) zu den Isocyanatgruppen von g2) 1:1,5 bis 1:2,5. Bevorzugt beträgt das Verhältnis ungefähr 1:2. Die erhaltenen Verbindungen g1) sind auch in organischen Lösungsmitteln gut lösbar. Die Umsetzung erfolgt bevorzugt in flüssiger Form, das heißt, es können gegebenenfalls Anteile organischer nicht reaktiver Lösungsmittel enthalten sein. Gegebenenfalls kann die Temperatur zur besseren Umsetzung etwas erhöht werden.
Die Verbindungen g1) können als separate Komponente zugesetzt werden. Es ist jedoch auch möglich, g1) in situ, in Gegenwart von f), aus der Mischung zu erzeugen und weiter umzusetzen.

Als Komponente g2) können zur Umsetzung beliebige organische Diisocyanate oder ihre Gemische eingesetzt werden. Es können zum Beispiel aliphatische oder aromatische, auch sterisch gehinderte Isocyanate oder oligomerisierte Isocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylenthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 2,4-Toluylendiisocyanat, 2,6-Toluylen-diisocyanat, 1-Isocyanatomethyl-5-isocyanato-1,3,3-trimethylcyclohexan, Bis-(4-isocvanatocyclohexyl)methan, Bis-(4-isocyanato-phenyl)-methan, 4,4-Diisocyanato-diphenylether, 1,5-Dibutylpentamethylendiisocyanat, Tetramethylxylylendiisocyanat und 2,3-Bis-(8-isocyanato-octyl)-4-octyl-5-hexylcyclohexan.

Es wird soviel Komponente g) bzw. Umsetzungsprodukt g1) eingesetzt, daß das entstehende Polyurethanprepolymer eine Säuerezahl von 5-50 mg KOH/g aufweist, bevorzugt zwischen 15-40 mg KOH/g. Phosphon- und Sulfonsäuren können in entsprechenden Mengen eingesetzt werden.

Die Komponente g) bzw. das Reaktionsprodukt g1) können beispielsweise in einer Menge von etwa 0,5 bis 7 Gew.-%, vorzugsweise etwa 0,8 bis etwa 4,0 Gew.-% (berechnet als Carboxylgruppe), bezogen auf das herzustellende Urethanprepolymer, eingesetzt werden. Wenn die Carboxylgruppenmenge unter etwa 0,5 % liegt, ist es schwierig, eine stabile Emulsion herzustellen. Wenn dagegen die Menge 7 Gew.-% übersteigt, verstärkt sich die hydrophile Eigenschaft, was die Emulsion hochviskos macht und die Wasserbeständigkeit der Beschichtung verringert.

Die Stabilisierung der wässrigen Dispersion erfolgt durch ionische Gruppen. Es können jedoch auch ionische und nicht-ionische Gruppen gemeinsam eingesetzt werden. Bevorzugt ist eine Stabilisierung allein durch anionische Gruppen.

Als Komponente h) können für die Herstellung der Polyurethandispersion B) beliebige organische Diisocyanate, gegebenenfalls auch als Gemisch, eingesetzt werden. Es kann sich beispielsweise um die unter g2) erwähnten Diisocyanate bzw. oligomeren Isocyanate handeln. Bevorzugt eingesetzt werden nicht vergilbende oder sterisch gehinderte Isocyanate mit 4 bis 25, vorzugsweise 6 - 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten. Das Grundgerüst kann zum Beispiel aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, 4,4'-Diphenylpropan-diisocyanat, Xylylendiisocyanat, 1,1,6,6-Tetramethyl-hexamethylendiisocyanat, p- und m-Tetramethylxylylendiisocyanat und die entsprechenden hydrierten Homologen.

Ebenfalls ist es möglich, zur Umsetzung Polyisocyanate einzusetzen, bei denen der 2 übersteigende Teil an Isocyanatgruppen irreversibel defunktionalisiert worden ist. Als Verbindungen zur Defunktionalisierung kommen beispielsweise niedermolekulare, primäre oder sekundäre Amine oder Alkohole in Betracht.

Die Mengen an f), g) und h) bzw. an f1), f2), g1) und h) werden so gewählt, daß bei der Umsetzung ein Umsetzungsprodukt mit endständigen OH-Gruppen entsteht, das heißt es wird mit einem Polyolüberschuß gearbeitet. Man kann mit einem OH zu NCO-Verhältnis von 1,01 bis 3 : 1 arbeiten, bevorzugt ist der Bereich 1,05 bis 2 : 1, besonders bevorzugt von 1,1 bis 1,5 : 1. Das Umsetzungsprodukt kann verzweigt aufgebaut sein, bevorzugt wird jedoch ein linearer Aufbau. Die Umsetzungsprodukte weisen ein Zahlenmittel der Molmasse (Mn) von 5.000 - 50.000, bevorzugt über 8.000 und unter 30.000 und eine OH-Zahl von 5 - 75mg KOH/g, bevorzugt über 10 und unter 50 mg KOH/g auf. Die Reaktion kann in einer Mischung aller Komponenten erfolgen oder die Reaktion erfolgt stufenweise.

Die Reaktion kann lösemittelfrei erfolgen, sie kann aber auch in dem Fachmann geläufigen für die Polyurethansynthese geeigneten, Lösemitteln durchgeführt werden. Die Lösemittel können im Ansatz verbleiben oder gegebenenfalls im Vakuum vor der weiteren Verarbeitung abdestilliert werden. Ebenso können weitere zusätzliche Lösemittel zugesetzt werden, um die Viskosität der Polymerlösung zu erniedrigen.

Als Lösemittel sind solche geeignet, die bei der Umsetzung der Isocyanate nicht stören. Es handelt sich beispielsweise um aromatische Kohlenwasserstoffe, wie Benzol, Toluol, Xylol, Ester, wie Ethylacetat, Butylacetat, Methylglykolacetat, Ethylglykolacetat, Methoxypropylacetat, Ether, wie Tetrahydrofuran, Dioxan, vollveretherte Mono- oder Diglykole von Ethylenglykol oder Propylenglykol, wie Diethylenglykol oder Dipropylenglykoldimethylether, Ketone wie Aceton, Methylethylketon, halogenhaltige Lösemittel wie Methylenchlorid oder Trichlormonoflourethan. Bevorzugt werden Lösemittel, die eine Dispergierung in der Wasserphase erleichtern. Ebenfalls bevorzugt werden Lösemittel, die später in den erfindungsgemäßen Überzugsmitteln keine negativen Eigenschaften aufweisen.

Das OH-funktionalisierte Polyurethan-Prepolymer wird als Zwischenprodukt durch Umsetzung mit weiteren Polyisocyanaten i) kettenverlängert. Diese werden beispielsweise homogen mit dem funktionalisierten Zwischenprodukt gemischt und dann gegebenenfalls durch Erwärmen oder mit in der NCO-Chemie üblichen Katalysatoren, zum Beispiel Dibutylzinndilaurat (DBTL), Aminderivate, unterstützt, zur Reaktion gebracht. Das kann vor oder nach der Salzbildung der in anionische Gruppen überführbaren Gruppen in der organischen oder wässrigen Phase geschehen, bevorzugt findet die Reaktion nach Neutralisation in der organischen Phase statt.

Als Polyisocyanate können beispielsweise lackübliche bekannte Poly- oder Diisocyanate eingesetzt werden, wie sie auch vorstehend für die Komponenten g2) und h) beschrieben worden sind. Sie können auf aliphatischer, cycloaliphatischer oder aromatischer Basis sein. Sie weisen bevorzugt eine Molmasse von unter 1.200 auf.

Als Polyisocyanate i) sind ebenfalls niedermolekulare NCO-terminierte Prepolymere geeignet. Diese sind bevorzugt difunktionell. Ihr Molekulargewicht liegt bevorzugt unter 1.000.

Vor oder nach der Kettenverlängerung werden die in anionische Gruppen überführbaren Gruppen neutralisiert. Hierzu werden Basen eingesetzt, zum Beispiel Ammoniak oder Amine. Geeignete Amine sind primäre, sekundäre oder tertiäre Amine, zum Beispiel Trialkylamine, wie Trimethylamin, Triethylamin, Triisopropylamin, Tri-n-propylamin und Tri-n-butylamin; N-Alkylmorpholine, wie N-Methylmorpholin und N-Ethylmorpholin; N-Dialkylalkanolamine, wie N-Dimethylethanolamin und N-Diethylenethanolamin; Dialkylamin wie Diethylamin, Dibutylamin, Diisopropylamin; Alkylamine wie Ethylamin, Hexylamin, Isopropylamin, Aminoethanol; Mischungen aus mindestens zwei dieser Verbindungen. Es werden im allgemeinen zwischen 30 % und 100 % der sauren Gruppen in Salzgruppen überführt.

Das Herstellen der wässrigen Dispersion kann nach an sich bekannten Verfahren erfolgen.

Beispiele für wäßrige Polyurethandispersionen B) sowie ihre Herstellung sind z.B. beschrieben in EP-A-634 431.

Die Polyurethandispersion B) weist eine Säurezahl von 5 bis 50 (bezogen auf den Festkörper), bevorzugt von 15 bis 35, besonders bevorzugt von 15-25 auf. Der Festkörpergehalt beträgt beispielsweise 25 bis 55 Gew.-%. Das zahlenmittlere Molekulargewicht (Mn) der Bindemittel beträgt 10.000 bis 300.000, bevorzugt 50.000 bis 200.000, besonders bevorzugt 40.000 bis 100.000. Die Polyurethane können gegebenenfalls noch weitere funktionelle Gruppen, wie zum Beispiel OH-Gruppen, aufweisen. Die entstehenden Dispersionen haben beispielsweise eine mittlere Teilchengröße zwischen 10 - 1.000 nm, bevorzugt 30 - 500, besonders bevorzugt 30-150 nm.

Aus der erfindungsgemäßen Bindemittelmischung aus den Komponenten A) und B) können wäßrige Überzugsmittel formuliert werden. Die Überzugsmittel enthalten 8 bis 20 Gew.-%, bezogen auf das gesamte Überzugsmittel, der erfindungsgemäßen Bindemittelmischung.

Die aus der erfindungsgemäßen Bindemittelmischung hergestellten Überzugsmittel enthalten 50 bis 90 Gew.-%, bevorzugt 60 bis 85 Gew.-%, an Wasser. Zur Verbesserung der Rheologie der Filmbildung und des Metalliceffektes, können 1 bis 20 Gew.-%, bevorzugt 6 bis 15 Gew.-%, jeweils bezogen auf das gesamte Überzugsmittel, eines oder mehrerer Lösemittel enthalten sein.

Als Lösemittel kommen organische Lösemittel in Frage, wie sie beispielsweise auf dem Lacksektor als Lacklösemittel und/oder Zusätze zu wässrigen Überzugsmitteln üblich sind.

Geeignet sind beispielsweise aromatische Lösemittel, wie Xylol, Ester, wie Butylacetat, Glykolether, wie Ethylenglykolmonobutylether (Butylglykol), Alkohole, wie Butanol, aliphatische Kohlenwasserstoffe, wie zum Beispiel Testbenzin.

In den Überzugsmitteln können übliche anorganische und/oder organische Farbpigmente und/oder Füllstoffe sowie transparente Pigmente enthalten sein. Beispiele für anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente.

Ebenso können in den Überzugsmitteln Effektpigmente enthalten sein. Die Effektpigmente zeichnen sich insbesondere durch einen plättchenartigen Aufbau aus. Beispiele für Effektpigmente sind: Metallpigmente, zum Beispiel aus Aluminium, Kupfer oder anderen Metallen; Interferenzpigmente, wie zum Beispiel metalloxidbeschichtete Metallpigmente, zum Beispiel titandioxidbeschichtetes oder mischoxidbeschichtetes Aluminium, beschichteter Glimmer, wie zum Beispiel titandioxidbeschichteter Glimmer und Graphiteffektpigmente.

Weiterhin können die Überzugsmittel lacktechnische Additive enthalten, beispielsweise rheologiebeeinflussende Mittel, wie hochdisperse Kieselsäure, Schichtsilikate oder polymere Harnstoffverbindungen. Als Verdicker wirken auch beispielsweise wasserlösliche Celluloseether sowie synthetische Polymere mit ionischen und/oder assoziativ wirkenden Gruppen wie modifizierte ethoxylierte Polyurethane oder Polyacrylate und Polypeptide. Daneben können auch Antiabsetzmittel, Verlaufsmittel, Lichtschutzmittel, Antischaummittel, wie beispielsweise silikonhaltige Verbindungen, Netzmittel sowie haftvermittelnde Substanzen eingesetzt werden.

Die Additive und Hilfsstoffe werden in üblichen, dem Fachmann geläufigen Mengen, je nach gewünschtem Effekt, zugesetzt.

Die erfindungsgemäßen Überzugsmittel können Neutralisationsmittel zur vollständigen oder teilweisen Neutralisation von neutralisierbaren Gruppen. Der Neutralisationsgrad neutralisierbarer Gruppen beträgt bevorzugt 40 bis 120% der neutralisierbaren Gruppen und liegt bevorzugt unter 100%.

Als Neutralisationsmittel für die sauren Gruppen kommen auf dem Lacksektor übliche Basen in Frage. Beispiele hierfür sind Ammoniak oder organische Amine wie Triethylamin, N-Methylmorpholin, Aminoalkohole wie Dimethylisopropanolamin, Dimethylethanolamin und 2-Amino-2-methylpropanol-1.

Es ist möglich, den Überzugsmitteln geringe Anteile weiterer wasserverdünnbarer Bindemittel zuzusetzen, wie sie für Erstellung von Basisschichten in der Fahrzeuglackierung üblich sind.

Die aus den erfindungsgemäßen Bindemitteldispersionen hergestellten wasserverdünnbaren Überzugsmittel können nach an sich bekannten Methoden hergestellt werden. Gegebenenfalls werden der Festkörpergehalt, der pH-Wert und die Viskosität des Überzugsmittels in üblicher Weise eingestellt. Die Überzugsmittel können mittels Grundauffertigung oder mittels eines Modulsystems, wie es in den DE-A-43 07 498 und DE-A- 43 01 991 beschrieben ist, hergestellt werden.

Die aus den erfindungsgemäßen Bindemitteldispersionen hergestellten Überzugsmittel sind physikalisch trocknend, d.h. sie erfordern kein Einbrennen und können beispielsweise bei Raumtemperatur oder forciert bei Temperaturen bis 80 °C, bevorzugt bis 60 °C, getrocknet werden.

Die erfindungsgemäßen Bindemitteldispersionen sind besonders für die Herstellung von Überzugsmitteln für farb- und/oder effektgebende Basisschichten in einer Mehrschichtlackierung geeignet. Es ist jedoch auch möglich, andere Überzugsmittel z.B. Grundierungen oder Füller daraus herzustellen. Dabei wird die Auswahl der Pigmente und Additive und ihre Konzentration dem jeweiligen Verwendungszweck angepaßt. Bevorzugtes Anwendungsgebiet ist die Fahrzeug- und Fahrzeugteilelackierung. Die Überzugsmittel sind sowohl für die Fahrzeugreparatur- als auch die Fahrzeugserienlackierung anwendbar. Auf Grund der niedrigen Härtungstemperaturen ist die Anwendung in der Fahrzeugreparaturlackierung bevorzugt.

Die Erfindung betrifft auch ein Verfahren zur Herstellung eines Mehrschichtüberzuges, bei dem auf ein ggf. vorbeschichtetes Substrat eine farb- und/oder effektgebende Basislackschicht aus den erfindungsgemäßen Überzugsmitteln aufgetragen wird und auf diese Basislackschicht entweder nach Trocknung bzw. Härtung oder naß-in-naß, gegebenenfalls nach kurzem Ablüften, eine Klarlackschicht aufgetragen wird. Als Klarlacke sind grundsätzlich alle bekannten nicht oder transparent pigmentierten Überzugsmittel, wie sie beispielsweise auf dem Kraftfahrzeugsektor üblich sind, geeignet. Es kann sich dabei um Klarlacke auf Lösemittel- oder Wasserbasis handeln.

Nach dem Auftragen werden Klarlack- und Basislackschicht, bevorzugt gemeinsam, getrocknet bzw. gehärtet. Das geschieht bei Temperaturen von beispielsweise 20-150 °C. Für Fahrzeugreparaturlackierungen sind Temperaturen von 20-80 °C bevorzugt und für Zwecke der Fahrzeugserienlackierung Temperaturen von über 100 °C. Die Applikation erfolgt nach üblichen Methoden, bevorzugt durch Spritzen.

Als Substrate sind Metall- und Kunststoffsubstrate, insbesondere die in der Automobilindustrie bekannten Substrate geeignet, wie z.B. Eisen, Zink, Aluminium, Magnesium oder deren Legierungen sowie Polyurethane, Polycarbonate oder Polyolefine.

Die aus den erfindungsgemäßen Bindemitteldispersionen hergestellten Überzugsmittel sind gasungsstabil und zeigen eine Langzeitlagerstabilität von mindestens 24 Monaten. Die erhaltenen Überzüge weisen sehr gute Härte und Wasserfestigkeit auf. Es wird eine ausreichende Ablaufsicherheit an senkrechten Flächen erreicht und formulierte Metallicbasislacke zeigen eine sehr gute Metalleffektausbildung.

Die Erfindung soll an den folgenden Beispielen näher erläutert werden.

### Herstellungsbeispiel 1

### Polyurethandispersion A)

Aus 850 Teilen eines Polycarbonats aus Hexandiol-1,6 (hergestellt durch die Reaktion von Hexandiol-1,6 und Diphenylcarbonat, OH-Zahl 56 mg KOH/g, Molekulargewicht ca. 2000), 67,5 Teilen eines monofunktionellen Polyetheralkohols mit OH-Zahl 26 mg KOH/g, hergestellt durch Alkoxylierung von n-Butanol unter Verwendung eines Gemisches aus 83 % Ethylenoxid und 17 % Propylenoxid, 21,4 Teilen 2,2-Bishydroxymethylpropionsäure und 22,5 Teilen Butandiol-1,4 wird durch Umsetzung bei 100 °C mit einem Gemisch aus 151,2 Teilen 1,6-Diisocyanatohexan und 199,8 Teilen Isophorondiisocyanat ein Prepolymer gebildet, welches einen Gehalt an freien Isocyanatgruppen von etwa 5 % aufweist. Das erhaltene Prepolymer wird in 2 440 Teilen Aceton gelöst; die Lösung wird auf 50 °C abgekühlt.

Aus 19,8 Teilen Ethylendiamin und 7,5 Teilen Hydrazinhydrat wird eine Lösung in 500 Teilen Wasser zubereitet. Diese Lösung wird langsam unter gutem Rühren zu der Prepolymerlösung gegeben; dabei entsteht eine dünnflüssige, weißlich-trübe Lösung. Nun werden 13,4 Teile N,N-Dimethylethanolamin zugesetzt. Unter starkem Rühren werden dann 1 525 Teile entionisiertes Wasser zugegeben; dabei bildet sich eine opake blau-weiße Dispersion. Durch Vakuumdestillation wird aus dieser Dispersion das Aceton entfernt. Es bleibt eine rein wäßrige Dispersion mit 40 Gew.-% Feststoffgehalt zurück.

| | |
|---|---|
| Der Feststoffanteil enthält: | 410 mEq Carbonatgruppen (-O-CO-O-) |
| | 148 mEq Urethangruppen (-NH-CO-O-) |
| | 95 mEq Harnstoffgruppen (-NH-CO-NH-) |

mEq = Milliäquivalent pro 100 g Feststoff

### Herstellungsbeispiel 2

### Polyurethandispersion B)

582 g eines handelsüblichen Polyesters (Mₙ = 1.000, OH-Zahl = 106), 28,7 g Dimethylolpropinsäure (DMPA) und 124 g N-Methylpyrrolidon (NMP) werden gemischt und bei 80 °C gelöst. Danach wird auf 50 °C abgekühlt. Zu der Mischung werden 139 g Isophorondiisocyanat (IPDI) gegeben, auf 80 °C aufgeheizt und 125 g NMP zugegeben. Die Mischung wird bis zum NCO-Wert < 0,1% umgesetzt.

Zu dem Umsetzungsprodukt werden 34,5 g IPDI bei 50 °C zugegeben und bis zum NCO-Wert < 0,1 % bei 80 °C umgesetzt. Dann werden 33,2 g Dimethylisopropanolaminlösung (50 %ig in Wasser) zugegeben und untergerührt. Danach wird mit 1.174 g vollentsalztem Wasser bei 80 °C unter gutem Rühren langsam versetzt. Es wird 3 Stunden homogenisiert.
- FK:: 36,3 % (bestimmt bei 30 min. 150 °C Umluftofen)
- SZ:: 16,7 mg KOH/g (Festkörper)
- MEQ-Amin:: 19,0 (Milliäquivalente pro 100 g Festkörper)
FK = Festkörpergewicht, SZ = Säurezahl, MEQ = Milliäquivalent

### Herstellungsbeispiel 3

### Herstellung von Metallic-Wasserbasislacken

Aus den vorstehend hergestellten Dispersionen A und B werden wäßrige Metallic-Basislacke mit den folgenden Bestandteilen hergestellt:
- 19,7: Tle. Dispersion A + 21,6 Tle. Dispersion B)
- 43,5: Tle. Wasser
- 3,3: Tle. n-Butanol
- 3,8: Tle. Butylglykol
- 0,5: Tle. N-Methylpyrrolidon
- 0,4: Tle. eines handelsüblichen Broncestabilisators
- 2,5: Tle. eines handelsüblichen Verdickers
- 0,2: Tle. N,N-Dimethylenethanolamin
- 5,0: Tle. einer handelsüblichen Aluminium-Paste (60 % Al)

### Herstellungsbeispiel 4

### Herstellung von Uni-Wasserbasislacken

Aus den vorstehend hergestellten Dispersionen A) und B) werden wäßrige Uni-Basislacke mit den folgenden Bestandteilen hergestellt:
- 17,0: Tle. Dispersion A) und
- 18,4: Tle. Dispersion B)
- 28,5: Tle. Wasser
- 3,7: Tle. Butylglykol
- 1,28: Tle. eines handelsüblichen Verdickers
- 0,2: Tle. N,N-Dimethylethanolamin
- 18,6: Tle. eines handelsüblichen Titandioxid-Pigmentes
- 0,4: Tle. eines handelsüblichen Kupferphthalocyanin-Pigmentes
- 0,12: Tle. eines handelsüblichen Entschäumers
- 10,0: Tle. eines handelsüblichen PU-Anreibehilfsmittels (FK 30 %)
- 1,8: Tle. n-Butanol

### Herstellungsbeispiel 5

### Herstellung von Vergleichs-Wasserbasislacken

### 5.1 Metallic-Wasserbasislack mit Dispersion A)

- 39,3: Tle. Dispersion A)
- 45,5: Tle. Wasser
- 3,8: Tle. Butylglykol
- 3,3: Tle. n-Butanol
- 2,5: Tle. eines handelsüblichen Verdickers
- 0,2: Tle. N,N-Dimethylethanolamin
- 5: Tle. einer handelsüblichen Aluminiumpaste für Wasserlacke
- 0,4: Tle. eines handelsüblichen Broncestabilisators

### 5.2. Uni-Wasserbasislack mit Dispersion A)

- 34: Tle. Dispersion A)
- 30: Tle. Wasser
- 3,7: Tle. Butylglykol
- 1,8: Tle. n-Butanol
- 1,18: Tle. eines handelsüblichen Verdickers
- 0,2: Tle. N,N-Dimethylethanolamin
- 18,6: Tle. eines handelsüblichen Titandioxid-Pigmentes
- 0,4: Tle. eines handelsüblichen Kupferphthalocyanin-Pigmentes
- 0,12: Tle. eines handelsüblichen Entschäumers
- 10: Tle. eines handelsüblichen PU-Anreibehilfsmittels (FK 30 %)

### 5.3 Metallic-Wasserbasislack mit Dispersion B)

- 43: Tle. Dispersion B)
- 41,8: Tle. Wasser
- 3,8: Tle. Butylglykol
- 3,3: Tle. n-Butanol
- 2,5: Tle. eines handelsüblichen Verdickers
- 0,2: Tle. N,N-Dimethylethanolamin
- 5: Tle. einer handelsüblichen Aluminiumpaste für Wasserlacke
- 0,4: Tle. eines handelsüblichen Broncestabilisators

### 5.4 Uni-Wasserbasislack mit Dispersion B)

- 37,3: Tle. Dispersion B)
- 26,6: Tle. Wasser
- 3,7: Tle. Butylglykol
- 1,8: Tle. n-Butanol
- 1,28: Tle. eines handelsüblichen Verdickers
- 0,2: Tle. N,N-Dimethylethanolamin
- 18,6: Tle. eines handelsüblichen Titandioxid-Pigmentes
- 0,4: Tle. eines handelsüblichen Kupferphthalocyanin-Pigmentes
- 0,12: Tle. eines handelsüblichen Entschäumers
- 10: Tle. eines handelsüblichen PU-Anreibehilfsmittels (FK 30 %)

### 5.5 Metallic-Wasserbasislack entsprechend DE-A-41 15 015

### Beispiel 3 und Herstellungsbeispiel 3

### Applikation der Wasserbasis- und Vergleichs-Wasserbasislacke

Mit den erhaltenen Wasserbasislacken wurden Lackierungen wie folgt durchgeführt:

### Lackieraufbau der bewerteten Bleche:

Blankgeschliffenes Karosserieblech
Praxisübliche 1K-Polyvinylbutyral-Grundierung
Praxisüblicher 2K-PU-Füller
Wasserbasislack
Praxisüblicher lösemittelbasierender 2K-Polyurethan-Klarlack, Medium solid-Typ, FK 47 %

### Applikation und Trocknung von Basislack und Klarlack:

Spritzapplikation des Wasserbasislackes
30 min. Vortrocknung bei Raumtemperatur
Spritzapplikation des Klarlackes
10 min. Ablüften bei Raumtemperatur
30 min. Trocknung bei 60 °C

Die Eigenschaften der erhaltenen Lackierungen sind in der folgenden Tabelle dargestellt:

| | Wasserfestigkeit | | Härte | | Lagerstabilität | | Metallic-Effekt |
|---|---|---|---|---|---|---|---|
| | metallic | uni | metallic | uni | metallic | uni | |
| Dispersion A+B | 2 | 2 | 2 | 2 | 1-2 | 2 | 1-2 |
| Dispersion A (Vergleich) | 2-3 | 3 | 2 | 2-3 | 2 | 3 | 4 |
| Dispersion B (Vergleich) | 2-3 | 2-3 | 2 | 2-3 | 3 | 4 | 4 |
| Dispersion Vgl.-Bsp. 5.5 | 3 | | 3 | | 3 | | 2-3 |
| Bewertung 1 sehr gut 2 gut 3 brauchbar 4 unbrauchbar | | | | | | | |

## Patentansprüche

1. Wäßrige Bindemitteldispersion für physikalisch trocknende Überzugsmittel enthaltend ein Gemisch aus
A) 20 - 80 Gew.-% eines oder mehrerer, Carbonatgruppierungen enthaltender Polyurethane mit einem Zahlenmittel der Molmasse (Mn) von 70 000 bis 500 000, in Form einer wäßrigen Dispersion, erhältlich durch Umsetzung von
a) 10-40 Gew.-% eines oder mehrerer organischer Polyisocyanate, die keine hydrophilen oder in hydrophile Gruppen überführbare Gruppen aufweisen,
b) 40-80 Gew.-% einer oder mehrerer höhermolekularer organischer Polyhydroxyverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,
c) 0,2-18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,
d) 1-12 Gew.-% einer oder mehrerer Verbindungen, die neben mindestens einer anionischen Gruppe oder mindestens einer in eine anionische Gruppe überführbaren Gruppe mindestens ein gegenüber Isocyanatgruppen reaktionsfähiges Wasserstoffatom aufweisen, und
e) 0-8 Gew.-% einer oder mehrerer nichtionisch hydrophiler Verbindungen, die mindestens eine Isocyanatgruppe oder mindestens eine gegenüber Isocyanatgruppen reaktionsfähige Gruppe aufweisen, wobei die Summe der Komponenten a) bis e) 100 Gew.-% beträgt
und
B) 20 - 80 Gew.-% eines oder mehrerer carbonatgruppenfreier und bevorzugt harnstoffgruppenfreier, ionische Gruppen enthaltender Polyurethanharze mit einem Zahlenmittel der Molmasse (Mn) von 10.000 bis 300.000 und einer Säurezahl von 5 bis 50 in Form einer wässrigen Dispersion, erhältlich durch Bereitung eines OH-Gruppen enthaltenden Polyurethan-Prepolymeren mit einer OH-Zahl von 5 bis 75 und einem Zahlenmittel der Molmasse (Mn) von 5.000 bis 50.000, durch Umsetzung in organischem Medium von
f) einer oder mehreren mit Isocyanat reaktiven Verbindungen mit einer Säurezahl von 0 bis 10, in Form von
f1) 70 bis 100 Gew.-% eines oder mehrerer, bevorzugt carboxylgruppenfreier Polyesterpolyole und/oder Polyetherpolyole mit einem Molekulargewicht von 500 bis 6.000, zusammen mit
f2) 0 bis 30 Gew.-% einer oder mehrerer von f1) unterschiedlicher Verbindungen mit mindestens zwei mit Isocyanat reaktiven Gruppen, mit einem Molekulargewicht von 60 bis 400, wobei die Summe der Komponenten f1) und f2) 100 Gew.-% beträgt, mit
g) mindestens einer Verbindung mit zwei mit Isocyanat reaktiven Gruppen und mindestens einer anionischen oder zur Anionenbildung befähigten Gruppe, wobei die Komponente g) separat oder in Form eines Reaktionsproduktes g1) aus Komponente g) und einem oder mehreren organischen Diisocyanaten g2) eingesetzt werden kann, wobei das molare Verhältnis der mit Isocyanatgruppen reaktiven Gruppen von g) zu den Isocyanatgruppen von g2) 1:1,5 bis 1:2,5 beträgt und wobei das Reaktionsprodukt g1) auch in Anwesenheit von Komponente f) hergestellt werden kann und die Komponente g) oder das Reaktionsprodukt g1) in einer derartigen Menge eingesetzt werden, daß die fertigen Polyurethanharze die gewünschte Säurezahl aufweisen, sowie mit
h) einem oder mehreren Polyisocyanaten mit mindestens zwei freien Isocyanatgruppen pro Molekül, in einer derartigen Menge, daß das molare Verhältnis der OH-Gruppen der Komponente f) zu den NCO-Gruppen der Komponenten g) und h) 1,01:1 bis 3:1 beträgt,
worauf das aus f), g) und h) erhaltende Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
i) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen,
wobei sich die Gew.-% der Komponenten A) und B) jeweils auf den Harzfestkörper beziehen und zu 100 % ergänzen.

2. Bindemitteldispersion nach Anspruch 1, dadurch gekennzeichnet, daß die Komponente A) pro 100 g Festharz mindestens 200 Milliäquivalente Carbonatgruppierungen der Formel -O-CO-O-enthält.

3. Bindemitteldispersion nach Anspruch 1 oder 2, dadurch gekennzeichnet, daß sie 40 bis 60 Gew.-% A) und 40 bis 60 Gew.-% B) enthält, wobei die Summe 100 Gew.-% beträgt.

4. Wäßriges Überzugsmittel enthaltend
8 - 20 Gew.-% einer oder mehrerer Bindemitteldispersionen nach Ansprüchen 1 bis 4,
50 bis 90 Gew.-% Wasser,
0 bis 20 Gew.-% eines oder mehrerer organischer Lösemittel,
0,1 bis 20 Gew.-% eines oder mehrerer Effektpigmente und/oder farbgebender Pigmente und/oder Füllstoffe,
sowie gegebenenfalls übliche Additive und Hilfsstoffe,
wobei die Summe der Bestandteile 100 Gew.-% beträgt.

5. Verwendung des wäßrigen Überzugsmittels nach Anspruch 4 zur Herstellung der Basisschicht einer Mehrschichtlackierung.
